# EUROPÄISCHE PATENTANMELDUNG

(11) **EP 4 400 995 A1**
(43) Veröffentlichungstag der Anmeldung: **17.07.2024**
(21) Anmeldenummer: 23151743.4
(22) Anmeldetag: 16.01.2023
(51) Int. Cl.: G06F 21/53, G06F 21/62, H04L 9/40

(54) **VERFAHREN ZUR DYNAMISCHEN ANPASSUNG EINER ZUGRIFFSRICHTLINIE FÜR EINE CONTAINER-IMPLEMENTIERTE ANWENDUNG WÄHREND DER LAUFZEIT**

(71) Anmelder: Siemens Aktiengesellschaft, 80333 München (DE)
(72) Erfinder: Knierim, Christian, 81373 München (DE)
(74) Vertreter: Siemens Patent Attorneys

(57) **Zusammenfassung**

Verfahren zur dynamischen Anpassung einer Zugriffsrichtlinie für eine Container-implementierte Anwendung während der Laufzeit, umfassend die Schritte:
- Empfangen (S1) einer Anwendungsspezifischen Zugriffsrichtlinie zusätzlich zu einer Bereitstellungskonfiguration für die Container-implementierte Anwendung auf einer Container-Laufzeitumgebung eines Gastrechners von einer Verwaltungsvorrichtung,
- Erstellen (S2) einer Containerinstanz entsprechend der Bereitstellungskonfiguration auf der Container-Laufzeitumgebung,
- Erstellen (S3) einer Laufzeitspezifischen Zugriffsrichtlinie für die Containerinstanz, indem die Anwendungsspezifische Zugriffsrichtlinie mit der mindestens einen für die Anwendung freigegebenen Identität aktualisiert wird,
- Erstellen (S4) eines Vertrauensspeichers umfassend mindestens eine Validierungskennung zur Validierung der Gültigkeit der mindestens einen freigegebenen Identität und Zuordnen des Vertrauensspeichers zur Containerinstanz durch die Verwaltungsvorrichtung,
- Überprüfen (S5) einer Zugriffsanfrage auf die Containerinstanz anhand der in der Zugriffsanfrage enthaltenen Identität eines Zugreifenden gegenüber der Laufzeitspezifischen Zugriffsrichtlinie und des Vertrauensspeichers durch eine Überprüfungseinheit, und
- Erlauben (S6) eines Zugriffs auf die Anwendung lediglich dann, wenn das Überprüfungsergebnis der Zugriffsanfrage positiv ist, ansonsten Ausführen (S7) einer Abweisungsfunktion.

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren, ein System und ein Computer-Programmprodukt zur dynamischen Erstellung einer Zugriffsrichtlinie für eine Container-implementierte Anwendung während der Laufzeit.

Container-Virtualisierung ist eine Virtualisierungsmethode auf Betriebssystemebene. Dabei wird Computerprogrammen eine komplette Laufzeitumgebung virtuell innerhalb eines isolierten bzw. abgeschlossenen Software-Containers zur Verfügung gestellt. Die Laufzeitumgebung kann von einer Vielzahl von Containern genutzt werden und greift auf einen Betriebssystemkern eines Gastrechners zu. Der Betriebssystemkern kann den Zugriff auf Ressourcen in Abhängigkeit davon einschränken, unter welchem Benutzer und Kontext ein Prozess läuft. Software-Container, im Weiteren kurz Container genannt, stellen somit gegenüber virtuellen Maschinen, die über ein eigenes Betriebssystem verfügen und mit Hilfe eines Hypervisors Hardwareressourcen des darunterliegenden Systems zugewiesen bekommen und über einen eigenen Betriebssystemkern verfügen, eine ressourcenschonende Art der Virtualisierung dar und kapseln eine in einem Container betriebene Software-Anwendung vom darunterliegenden Gastrechner ab.

Um einen Container auf dem Gastrechner starten zu können, wird ein Containerimage benötigt, welches neben der Anwendungssoftware auch die für die Anwendungssoftware erforderlichen Binärprogramme und Bibliotheken enthält. Aus dem Containerimage wird mit Hilfe einer Deployment-Information, auch als Bereitstellungskonfiguration bezeichnet, auf dem Gastrechner ein Container, genauer eine Containerinstanz, erstellt und auf der Laufzeitumgebung des Gastrechners ausgeführt.

Eine orchestrierte Laufzeitumgebung umfasst einen Orchestrierer und mindestens einen Gastrechner, meist eine Vielzahl von Gastrechnern, die dem Orchestrierer zugeordnet sind. Der Orchestrierer startet, verwaltet und beendet Containerinstanzen auf den zugeordneten Gastrechnern. Typische orchestrierte Laufzeitumgebungen sind hierbei Kubernetes-basierte Containerumgebungen, die beispielsweise Cloud-basierte Containeras-a-Services-Umgebungen oder in einer Cloud betriebene virtuelle Instanzen als Knoten einer orchestrierten Laufzeitumgebung verwalten.

Software-Anwendungen werden mittlerweile in vielen Bereichen durch den Einsatz von Container-Technologie implementiert, beispielsweise in der Industrieautomation und der Prozesssteuerung, aber auch in Transportsystemen oder der Gebäudeautomatisierung. Eine Container-implementierte Anwendung stellt beispielsweise einen Dienst bereit auf den ein Nutzer des Dienstes, insbesondere eine andere Anwendung, zugreifen möchte. Um Dienste gegenseitig zu authentisieren und autorisieren, wird häufig ein Transportschicht-Sicherheitsprotokoll, auch als Transport Layer Security TLS Protokoll verwendet.

Dabei werden Zugriffsberechtigungen anhand einer Identität eines Clients auf einem Zieldienst gewährt. Die Identität wird bei der Verwendung des TLS-Protokolls auf Basis von digitalen Zertifikaten, insbesondere gemäß des X.509 Standards, und der im Zertifikat definierten Inhalte festgestellt. Die Vertrauenswürdigkeit des Zertifikats wird durch eine digitale Signatur von einer das Zertifikat ausstellenden Zertifizierungsstelle bzw. einer vertrauenswürdigen zentralen Zertifizierungsstelle bestätigt. Elementar bei TLS-Verfahren ist die Definition eines so genannten Truststores, der Zertifikate der ausstellenden Zertifizierungsstelle als Vertrauensanker enthält, mit denen die Anwendung das Zertifikat und damit die Identität des anfragenden Clients validieren kann.

Das TLS-Protokoll wird in unterschiedlichen Anwendungskontexten eingesetzt. Beispielsweise wird eine Zugriffsanfrage vom Client autorisiert, indem die Containerinstanz die Identität bzw. das Zertifikat des Clients validiert und gegenüber einer Autorisierungsrichtline abgleicht. Sind die Identitäten bzw. deren Vertrauensanker vorab nicht bekannt und soll die Autorisierungsrichtlinien für eine Zielanwendung dennoch vorab definiert werden, ist dies mit bekannten Verfahren nicht möglich.

Somit besteht der Bedarf an einer Lösung, und auch die hierfür verwendeten Zertifizierungsstellen bzw. Zertifikate Geräte- bzw. Cluster-spezifisch unterschiedliche Vertrauensstellungen zugewiesen bekommen können.

Es ist somit eine Aufgabe der vorliegenden Erfindung, ein Verfahren zu schaffen, bei dem Zugriffsrichtlinien dynamisch während der Laufzeit der containerimplementierten Anwendung auf Basis von Identitäten der Clients erzeugt, aktualisiert und durchgesetzt werden können.

Die Aufgabe wird durch die in den unabhängigen Ansprüchen beschriebenen Maßnahmen gelöst. In den Unteransprüchen sind vorteilhafte Weiterbildungen der Erfindung dargestellt.

Gemäß einem ersten Aspekt betrifft die Erfindung ein Verfahren zur dynamischen Anpassung einer Zugriffsrichtlinie für eine Container-implementierte Anwendung während der Laufzeit, umfassend die Schritte:
- Empfangen einer Anwendungsspezifischen Zugriffsrichtlinie zusätzlich zu einer Bereitstellungskonfiguration für die Container-implementierte Anwendung auf einer Container-Laufzeitumgebung eines Gastrechners von einer Verwaltungsvorrichtung,
- Erstellen einer Containerinstanz entsprechend der Bereitstellungskonfiguration auf der Container-Laufzeitumgebung,
- Erstellen einer Laufzeitspezifischen Zugriffsrichtlinie für die Containerinstanz, indem die Anwendungsspezifische Zugriffsrichtlinie mit für die Anwendung freigegebenen Identitäten aktualisiert wird,
- Erstellen eines Vertrauensspeichers umfassend mindestens eine Validierungskennung zur Validierung der Gültigkeit der mindestens einen freigegebenen Identität und Zuordnen des Vertrauensspeichers zur Containerinstanz durch die Verwaltungsvorrichtung,
- Überprüfen einer Zugriffsanfrage auf die Containerinstanz anhand der in der Zugriffsanfrage enthaltenen Identität eines Zugreifenden gegenüber der Laufzeitspezifischen Zugriffsrichtlinie und des Vertrauensspeichers durch eine Überprüfungseinheit, und
- Erlauben eines Zugriffs auf die Anwendung lediglich dann, wenn das Überprüfungsergebnis der Zugriffsanfrage positiv ist, ansonsten Ausführen einer Abweisungsfunktion.

Somit können Zugriffsberechtigungen auf die containerisierte Anwendung vorab definiert werden, beispielsweise von einem Entwickler der Anwendung. Dies ist möglich, ohne dass die tatsächlich zugelassenen Zugreifer / Clients bzw. deren finale Identitäten zum Zeitpunkt der Erstellung der Zugriffsrichtlinie bekannt sind. Die Zugriffsrichtlinie wird durch die Überprüfungseinheit, die als integraler Bestandteil der Containerinstanz oder als eigenständige Einrichtung außerhalb der Anwendung ausgebildet ist, durchgesetzt werden.

In einer vorteilhaften Ausführungsform umfasst die Anwendungsspezifische Zugriffsrichtlinie mindestens eine Rollenspezifische Zugriffsrichtlinie und die für die Anwendung freigegebenen Identitäten werden entsprechend einer ihnen zugewiesenen Rolle von der Verwaltungsvorrichtung den Rollenspezifischen Richtlinien zugeordnet.

Somit kann die gleiche Anwendungsspezifische Zugriffsrichtlinie für unterschiedliche Benutzergruppen wiederverwendet werden. Dies reduziert den Aufwand für das Erstellen von Zugriffsrichtlinien.

In einer vorteilhaften Ausführungsform wird eine bisher nicht im Vertrauensspeicher enthaltene, für die Validierung von erlaubten Identitäten gültige weitere Validierungskennung in den Vertrauensspeicher während der Laufzeit aufgenommen und dieser aktualisierte Vertrauensspeicher der Containerinstanz bereitgestellt.

Somit kann der Vertrauensspeicher während der Laufzeit der Anwendung aktualisiert werden. Wird beispielsweise ein Zertifikat für einen erlaubten Zugreifenden bzw. für dessen Identität widerrufen und ein neues Zertifikat von einer anderen Zertifizierungsstelle erstellt, so kann die Validierungskennung der anderen Zertifizierungsstelle in den Vertrauensspeicher aufgenommen und somit eine Validierung des neuen Zertifikats ermöglicht werden.

In einer vorteilhaften Ausführungsform ersetzt die weitere Validierungskennung die erste Validierungskennung oder wird die weitere Validierungskennung zusätzlich zur ersten Validierungskennung in den Vertrauensspeicher aufgenommen.

Somit kann der Vertrauensspeicher dynamisch während der Laufzeit an die freigegebenen Identitäten und deren Zertifikate angepasst werden.

In einer vorteilhaften Ausführungsform ist die Validierungskennung ein Zertifikat umfassend einen öffentlichen Schlüssel einer Zertifizierungsstelle oder ein Zertifikat umfassend den öffentlichen Schlüssel jeweils eines Zertifikates einer Teilmenge der freigegebenen Identitäten.

Dadurch kann der Zugriff auf die Containerimplementierte Anwendung nicht nur auf Zertifizierungsstellen, sondern auch auf Gruppen von Zertifikaten oder zertifikatsspezifisch auf einzelne Zertifikate abgestuft werden.

In einer vorteilhaften Ausführungsform wird der Vertrauensspeicher durch Zuweisen eines Speicherbereichs, auf dem der aktualisierte Vertrauensspeicher gespeichert ist, der Containerinstanz bereitgestellt.

Somit kann der Vertrauensspeicher flexibel und einfach einer oder mehreren Containerinstanzen einer Anwendung zugewiesen werden oder auch Containerinstanzen von unterschiedlichen Anwendungen zugewiesen werden.

In einer vorteilhaften Ausführungsform ist der zugewiesene Speicherbereich ein persistenter Speicher oder ein flüchtiger Speicher und/oder der zugewiesene Speicherbereich wird dynamisch während der Laufzeit durch die Verwaltungsvorrichtung erzeugt.

Durch einen flüchtigen Speicher kann der Vertrauensspeicher beim Abschalten der gelöscht bzw. bei einem persistenten Speicher beibehalten werden. Somit kann der Vertrauensspeicher flexibel an die Anwendung bzw. die Anforderungen der Anwendungsumgebung angepasst werden.

In einer vorteilhaften Ausführungsform wird der Vertrauensspeicher durch Auswahl eines entsprechend vorkonfigurierten Vertrauensspeichers aus der Mehrzahl von Vertrauensspeichern erstellt.

Durch eine Auswahl an vorkonfigurierten Vertrauensspeichern verringert sich der Konfigurationsaufwand für die einzelne Anwendung und verkürzt die Zeit bis zur Bereitstellung des Vertrauensspeichers.

In einer vorteilhaften Ausführungsform wird jeder Identität, die für die Anwendung freigegebenen ist, und/oder dem Zertifikat der freigegebenen Identität ein Vertrauensstatus zugeordnet.

Somit ist eine Applikationsspezifische Zuweisung des Vertrauensstatus auf einer Container-Laufzeitumgebung des Gastrechners oder in einer orchestrierten Laufzeitumgebung auf allen Gastrechnern eines orchestrierten Clusters an Gastrechnern möglich. Dadurch kann die gleiche Identität auf dem gleichen Gastrechner bzw. Cluster für unterschiedliche Anwendungen unterschiedlich berechtigt werden.

In einer vorteilhaften Ausführungsform wird jedem Vertrauensstatus ein Gültigkeitsbereich zugeordnet und der Vertrauensstatus ist lediglich in dem zugeordneten Gültigkeitsbereich gültig.

Ein Betreiber einer Laufzeitumgebung kann den Gültigkeitsbereich des Vertrauensstatus beispielsweise auf den Gastrechner, bei einer orchestrierten Laufzeitumgebung auf das orchestrierte Cluster, Standort-spezifisch und dergleichen für jede Laufzeitumgebung oder auch für jede Applikation, die auf einem Gastrechner oder einem Cluster betrieben wird, einstellen.

In einer vorteilhaften Ausführungsform ist in einer Vertrauensdatenbank jeder Identität ein für die Identität ausgestelltes Zertifikat, bevorzugt mit einer Kennung einer Zertifizierungsstelle des Zertifikats, und zusätzlich jeder Identität mindestens eine der folgenden Angaben zugeordnet:
- eine der Identität zugeordnete Rolle in der Anwendung,
- der Vertrauensstatus, und/oder Gültigkeitsbereich des Vertrauensstatus in der Anwendung.

Die Vertrauensdatenbank umfasst somit alle für die Anwendung freigegebenen Identitäten und weitere Zugriffsbedingungen der Identitäten für die Anwendung.

In einer vorteilhaften Ausführungsform werden die für die Anwendung freigegebenen Identitäten von der Vertrauensdatenbank bereitgestellt, und die Laufzeitspezifische Zugriffsrichtlinie aus der Anwendungsspezifische Zugriffsrichtlinie neu erstellt wird, wenn ein Eintrag in der Vertrauensdatenbank geändert, hinzugefügt oder gelöscht wird.

Die Vertrauensdatenbank stellt somit die Information zum Erstellen der Laufzeitspezifischen Zugriffsrichtline der Containerinstanz bzw. der Container-Laufzeitumgebung während der Laufzeit der Containerinstanz bereit. Änderungen können somit während der Laufzeit der Containerinstanz einfach in die Zugriffsrichtlinie eingebracht werden.

Gemäß einem zweiten Aspekt betrifft die Erfindung ein System zur dynamischen Anpassung einer Zugriffsrichtlinie für eine Container-implementierte Anwendung während der Laufzeit, umfassend eine Verwaltungsvorrichtung, eine Container-Laufzeitumgebung und eine Überprüfungseinheit auf einem Gastrechner, und eine Vertrauensdatenbank die derart ausgebildet sind folgende Schritte auszuführen:
- Empfangen einer Anwendungsspezifischen Zugriffsrichtlinie zusätzlich zu einer Bereitstellungskonfiguration für die Container-implementierte Anwendung auf der Container-Laufzeitumgebung des Gastrechners von der Verwaltungsvorrichtung,
- Erstellen einer Containerinstanz entsprechend der Bereitstellungskonfiguration auf der Container-Laufzeitumgebung,
- Erstellen einer Laufzeitspezifischen Zugriffsrichtlinie für die Containerinstanz, indem die Anwendungsspezifische Zugriffsrichtlinie mit den für die Anwendung freigegebenen Identitäten aktualisiert wird, und
- Erstellen eines Vertrauensspeichers umfassend mindestens eine Validierungskennung zur Validierung der Gültigkeit der mindestens einen freigegebenen Identität und Zuordnen des Vertrauensspeichers zur Containerinstanz durch die Verwaltungsvorrichtung,
- Überprüfen einer Zugriffsanfrage auf die Containerinstanz anhand der in der Zugriffsanfrage enthaltenen Identität eines Zugreifenden gegenüber der Laufzeitspezifischen Zugriffsrichtlinie und des Vertrauensspeichers durch die Überprüfungseinheit, und
- Erlauben eines Zugriffs auf die Anwendung, lediglich dann, wenn das Überprüfungsergebnis der Zugriffsanfrage positiv ist, ansonsten Ausführen einer Abweisungsfunktion.

Optional umfasst das System eine Orchestrierungsvorrichtung, wenn die Anwendung in einer orchestrierten Umgebung ausgeführt wird. In der orchestrierten Umgebung wird die mindestens eine Containerinstanzen der Anwendung durch die Orchestrierungsvorrichtung auf den Gastrechnern eines Clusters von Gastrechnern gestartet, verwaltet und gestoppt. Die Orchestrierungsvorrichtung erstellt und/oder verwaltet in diesem Fall den Vertrauensspeicher, übermittelt die Anwendungsspezifische Zugriffsrichtlinie zusammen mit der Bereitstellungskonfiguration an den Gastrechner und erstellt und verwaltet den Vertrauensspeicher.

Gemäß einem dritten Aspekt betrifft die Erfindung ein Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens durchzuführen.

Sofern es in der nachfolgenden Beschreibung nicht anders angegeben ist, beziehen sich die Begriffe "empfangen", "erstellen", "überprüfen", "erlauben" und dergleichen, vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse.

Das System und darin optional enthaltene Komponenten, wie beispielsweise der Gastrechner, die Überprüfungseinheit, die Vertrauensdatenbank, die Orchestrierungseinrichtung, und dergleichen kann bzw. können einen oder mehrere Prozessoren, umfassen. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Ein Computerprogrammprodukt, wie z. B. ein Computerprogrammmittel, kann beispielsweise als Computerlesbares Speichermedium, in Form einer Speicherkarte, USB-Stick, CD-ROM, DVD oder auch in Form einer herunterladbaren Datei von einem Server in einem Netzwerk bereitgestellt oder geliefert werden.

Ausführungsbeispiele des erfindungsgemäßen Verfahrens und der erfindungsgemäßen Vorrichtung sind in den Zeichnungen beispielhaft dargestellt und werden anhand der nachfolgenden Beschreibung näher erläutert. Es zeigen:
- Fig. 1: eine Ausführungsbeispiel des erfindungsgemäßen Systems in Blockdarstellung;
- Fig. 2: ein Ausführungsbeispiel des erfindungsgemäßen Verfahrens als Ablaufdiagramm;
- Fig. 3: eine Ausführungsbeispiel zum erfindungsgemäßen Erstellen und/oder Aktualisieren der Zugriffsrichtlinien als Ablaufdiagramm;
- Fig. 4: ein Ausführungsbeispiel eines erfindungsgemäßen Vertrauensspeichers in schematischer Darstellung; und
- Fig. 5: ein Ausführungsbeispiel des Erstellens einer Laufzeitspezifischen Zugriffsrichtlinie des erfindungsgemäßen Verfahrens in Form eines Ablaufdiagramm.

Einander entsprechende Teile sind in allen Figuren mit den gleichen Bezugszeichen versehen.

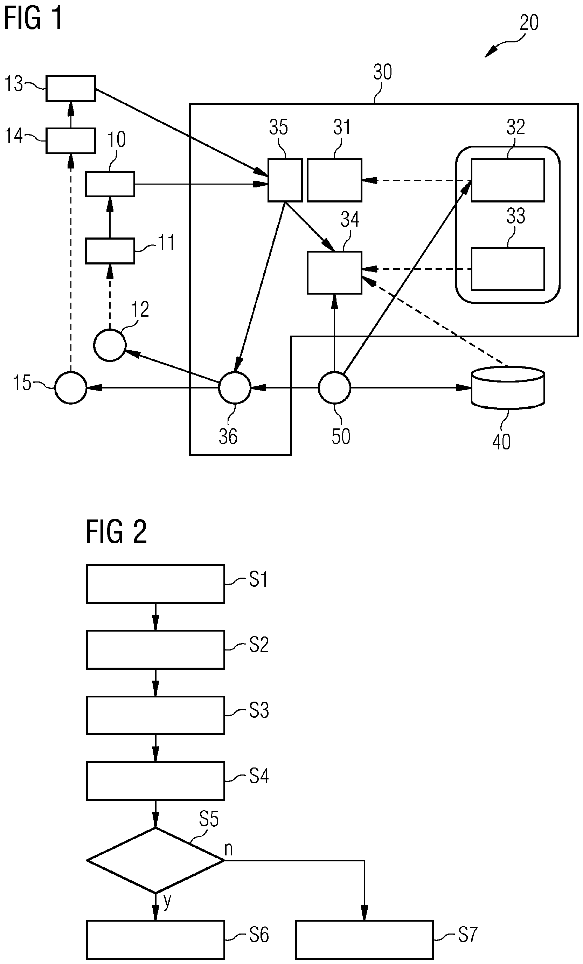

Fig. 1 zeigt ein erfindungsgemäßes System 20 in einem Anwendungsszenario mit einem Zugreifenden 10 und einem Zugreifenden 13, die auf eine Anwendung zugreifen möchten. Die Anwendung ist auf mindestens einer Containerinstanz 31 implementiert. Verschiedene Anwendungskomponenten können auch in unterschiedlichen Containerinstanzen 31 ausgeführt und im Zusammenspiel der einzelnen Containerinstanzen die Anwendung bereitstellen. Jede der Containerinstanzen 31 wird in einer Containerlaufzeitumgebung auf einem Gastrechner ausgeführt.

Um den Zugriff von einem der Zugreifenden 10, 13, auch als Client bezeichnet, auf die Anwendung, auch als Server bezeichnet, einseitig oder gegenseitig zu authentisieren und zu autorisieren, wird eine Kommunikation entsprechend einem Sicherheitsprotokoll verwendet. Dabei werden Zugriffsberechtigungen anhand einer Identität des Zugreifenden 10, 13 auf einem Zielservice, hier auf die durch die Containerinstanz 31 bereitgestellte Anwendung gewährt. Die Identität wird durch eine validierbare Datenstruktur 11, 14 repräsentiert, deren Gültigkeit durch eine Validierungskennung überprüfbar ist. Ein Vertrauensspeicher 36, auch als Truststore bezeichnet, stellt die Validierungskennungen bereit.

Bei der Verwendung eines Transportschicht-Sicherheitsprotokolls TLS ist die validierbare Datenstruktur 11, 14 ein digitales Zertifikat, beispielsweise gemäß dem X.509 Standard. Die Identität wird durch die im Zertifikat definierten Inhalte festgestellt. Das Zertifikat ist mit einer digitalen Signatur einer Zertifizierungsstelle 12, 15 signiert. Bei (m)TLS-Verfahren ist die Validierungskennung ein Stammzertifikat, auch Root-Zertifikat genannt, mit dessen Hilfe die Anwendung, welche die Identität des Zugreifenden 10, 14 ermitteln möchte, die im Zertifikat definierte Identität validieren kann. Der Vertrauensspeicher 36 stellt somit die Stammzertifikate zur Validierung der Identitäten bzw. derer Zertifikate bereit.

Das Sicherheitsprotokoll, beispielsweise das TLS-Protokoll, wird verwendet um Anfragen von Zugreifenden, beispielsweise Container-implementierte oder nicht-containerisierte Anwendungen oder Anwendungskomponenten zu authentisieren und autorisieren. Der Zugreifende wird durch das Validieren des Zertifikats durch die Validierungskennung authentisiert und durch Abgleich gegenüber einer Zugriffsrichtlinie zum Zugriff auf die Anwendung autorisiert. In der Zugriffsrichtlinie wird hierbei direkt die im Zertifikat hinterlegte Identität, beispielsweise eine Seriennummer des Zertifikats referenziert. Die Identität kann beispielsweise ein Subject, eine Seriennummer oder ein beliebiges Attribut des Zertifikats oder eine beliebige Kombination von Attributen des Zertifikats sein. Die Identität ist dabei so gewählt, dass sie eindeutig ist.

Sind die Identitäten und deren Validierungskennungen vor dem Starten der Zielanwendung in der Containerinstanz nicht bekannt und sollen dennoch Zugriffsrichtlinien für eine Zielanwendung vorab definiert werden, ist dies mit dem bisher bekannten System bzw. Verfahren nicht möglich.

Das System 20 ermöglicht dies. Das System 20 umfasst einen Gastrechner 30, eine Vertrauensdatenbank 40 sowie eine Verwaltungsvorrichtung 50. Der Gastrechner 30 umfasst eine Container-Laufzeitumgebung 31 auf der die Containerinstanz 31 basierend auf einer Bereitstellungskonfiguration 32 ausführbar ist. Der Gastrechner 30 umfasst des Weiteren eine Steuerungseinheit, die derart ausgebildet ist, eine Anwendungsspezifische Zugriffsrichtlinie 33 zu empfangen und für den Zugriff freigegebene Identitäten von der Vertrauensdatenbank 40 zu empfangen und daraus eine Laufzeitspezifische Zugriffsrichtlinie 34 zu erstellen. Der Gastrechner 30 umfasst des Weiteren eine Überprüfungseinheit 35, die derart konfiguriert ist, eine Zugriffsanfrage von einem Zugreifenden gegenüber der Laufzeitspezifischen Zugriffsrichtlinie 34 und dem Vertrauensspeicher 36 zu validieren. Die Überprüfungsvorrichtung 35 ist beispielsweise als integraler Bestandteil der Anwendung in der Containerinstanz ausgebildet oder als separate Containerimplementierte Funktion auf dem Gastrechner 30 ausgebildet. Die Verwaltungsvorrichtung 50 verwaltet die Vertrauensdatenbank 40 und erstellt mit deren Hilfe den Vertrauensspeicher 36. Die Verwaltungsvorrichtung 50 ist insbesondere in einer nicht-orchestrierten Umgebung als eine Erweiterung der Laufzeitumgebung oder als "Orchestrierungs-Container" auf dem Gastrechner ausgebildet. Die Verwaltungsvorrichtung instanziiert aus der anwendungsspezifischen Zugriffsrichtlinie die Laufzeitspezifische Zugriffsrichtlinie und ordnet die Vertrauensspeicher den Instanzen zu.

Das System 20 umfasst mindestens einen Prozessor und einen Speicher, die derart ausgebildet sind, ein Computerprogrammprodukt umfassend ein nicht flüchtiges computerlesbares Medium und Programmcodeteile, in den Speicher zu laden und bei Ausführung der Programmcodeteile die Schritte des Verfahrens durchzuführen.

Der Ablauf des Verfahrens zur dynamischen Anpassung der Zugriffsrichtlinie für eine Container-implementierte Anwendung während der Laufzeit wird nachfolgend anhand von Fig.2 mit Bezugnahme auf die Komponenten des Systems in Fig.1 näher erläutert.

Die der Erfindung zu Grunde liegende Idee besteht darin, dass der Ersteller einer Containerimplementierten Anwendung gemeinsam mit der Bereitstellungsinformation 32, auch Deployment-Konfiguration genannt, zusätzlich eine Anwendungsspezifische Zugriffsrichtlinie ausliefert. Die Anwendungsspezifische Zugriffsrichtlinie umfasst vordefinierte, allgemein bekannte Platzhalter, welche Rollen repräsentieren. Den Rollen werden Identitäten, die zur Laufzeit bekannt sind, vom Betreiber der Laufzeitumgebung zugeordnet.

Im ersten Verfahrensschritt S1 wird eine Anwendungsspezifische Zugriffsrichtlinie 33 und eine Bereitstellungskonfiguration 32 für die Container-implementierte Anwendung auf einer Container-Laufzeitumgebung eines Gastrechners empfangen. Die Anwendungsspezifische Zugriffsrichtlinie 33 und die Bereitstellungskonfiguration 32 werden von der Verwaltungsvorrichtung 50 an die Containerlaufzeitumgebung bereitgestellt. In einer orchestrierten Laufzeitumgebung, in der die Containerimplementierte Anwendung von einer Orchestrierungsvorrichtung auf mindestens einem Gastrechner eines Clusters von Gastrechnern verwaltet wird, führt die Orchestrierungsvorrichtung die Funktionen der Verwaltungsvorrichtung 50 aus.

Anschließend wird eine Containerinstanz 31 entsprechend der Bereitstellungskonfiguration 32 und auf der Container-Laufzeitumgebung erstellt, siehe S2, und eine Laufzeitspezifischen Zugriffsrichtlinie 34 für die Containerinstanz 31 erstellt, siehe S3. Die Anwendungsspezifische Zugriffsrichtlinie 33 wird dazu mit den für die Anwendung freigegebenen Identitäten von Zugreifenden aktualisiert. Die freigegebenen Identitäten werden von einer Vertrauensdatenbank 40 bereitgestellt. In Verfahrensschritt S4 wird der Vertrauensspeicher 36 umfassend mindestens eine Validierungskennung zur Validierung der Gültigkeit der mindestens einen freigegebenen Identität erstellt und der Containerinstanz 31 zugeordnet und bereitgestellt. Der Vertrauensspeicher 36 wird bevorzugt durch die Verwaltungs- bzw. Orchestrierungsvorrichtung 50 erstellt bzw. aktualisiert. Die Verfahrensschritte S3 und S4 können auch in umgekehrter Reihenfolge ausgeführt werden.

Empfängt die Containerinstanz 31 bzw. die Überprüfungseinheit 35 eine Zugriffsanfrage von einem Zugreifenden 10, 13 wird die Zugriffsanfrage auf die Containerinstanz 31 anhand der in der Zugriffsanfrage enthaltenen Identität eines Zugreifenden 10, 13 gegenüber der Laufzeitspezifischen Zugriffsrichtlinie 34 und dem Vertrauensspeicher 36 durch eine Überprüfungseinheit 35 überprüft, siehe S5. Wird die Identität bzw. deren Zertifikat durch eine der Validierungskennungen aus dem Vertrauensspeicher 36 als gültig validiert, ist das Überprüfungsergebnis der Zugriffsanfrage positiv, wird dem Zugreifenden 10, 13 der Zugriff auf die Anwendung erlaubt, siehe Verfahrensschritt S6. Ist dies nicht der Fall wird eine Abweisungsfunktion ausgeführt, siehe S7.

Die Anwendungsspezifische Zugriffsrichtlinie 33 umfasst bevorzugt mindestens eine Rollenspezifische Zugriffsrichtlinie bei der Rolle, die ein Zugreifer und damit seine Identität für die Anwendung einnimmt, Zugriffsregeln zuordnet. Hat die Identität die Rolle eines Wartungseinheit, so wird der Identität ein Zugriff auf beispielsweise einen Logspeicher der Anwendung gewährt. und die für die Anwendung freigegebenen Identitäten/Zertifikate entsprechend einer ihnen zugewiesenen Rolle von der Verwaltungsvorrichtung den Rollenspezifischen Richtlinien zugeordnet werden.

Wie in Fig. 1 dargestellt, können unterschiedliche Zugreifende 10, 13, die durch unterschiedliche Identitäten repräsentiert werden zur Laufzeit unterschiedliche Zertifikate 11, 14 zur Authentisierung verwenden, die von unterschiedlichen Zertifizierungsstellen 12, 15 ausgestellt sind. Damit eine containerimplementierte Anwendung, d.h. die Containerinstanz 31 die Vertrauenswürdigkeit des Zertifikates des Zugreifenden 10, 13 überprüfen kann, ist es erforderlich, dass der Containerinstanz immer dann einen aktualisierten Vertrauensspeicher 36 von der Verwaltungs- bzw. Orchestrierungsvorrichtung 50 zur Verfügung gestellt wird, wenn in der Verwaltungs- bzw. Orchestrierungsvorrichtung 50 eine neue Validierungskennung der Zertifizierungsstelle, beispielsweise ein neues Stammzertifikat mit einem neuen öffentlichen Schlüssel bekannt wird. Das neue Zertifikat der Zertifizierungsstelle wird beispielsweise durch einen Administrator bekannt gemacht.

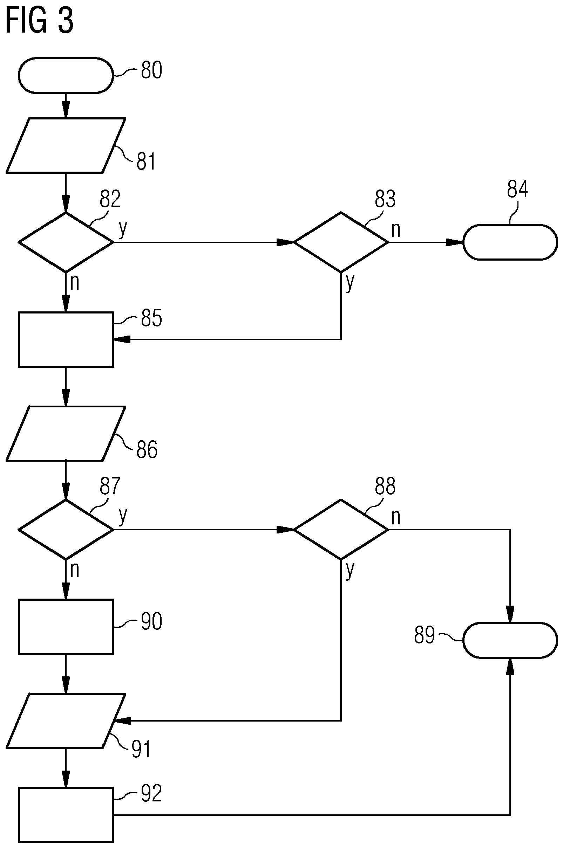

Fig. 3 zeigt den Ablauf zur Erstellung und/oder Aktualisierung der Laufzeitspezifischen Zugriffsrichtlinie als Ablaufdiagramm. Nach dem Start 80 wird eine Validierungskennung, beispielsweise durch einen Administrator in der Verwaltungsvorrichtung 50 bekannt gemacht, siehe Schritt 81. Anschließend, siehe 82, wird geprüft, ob die Validierungskennung bereits vorhanden ist. Ist die Validierungskennung bereits bekannt, wird in 83 geprüft, ob sich die Validierungskennung geändert hat. Ist dies nicht der Fall erfolgt keine weitere Aktion, siehe 84. Wird eine Änderung der Validierungskennung festgestellt, wird der Vertrauensspeicher mit der Validierungskennung aktualisiert, siehe 85. Ist die Validierungskennung noch nicht vorhanden, wird der Vertrauensspeicher aktualisiert, siehe 85.

Wird eine Zertifikatsreferenz und deren Vertrauensstatus und/oder dessen Gültigkeitsbereich empfangen, siehe 86 wird überprüft, ob diese Zertifikatsreferenz, deren Vertrauensstatus und Gültigkeitsbereich bereits in der Vertrauensdatenbank vorhanden sind, siehe 87. Ist dies der Fall, wird geprüft ob sich diese geändert habe, siehe 88. Ist dies nicht der Fall, wird keine weitere Aktion ausgeführt, siehe 89. Hat sich die Zertifikatsreferenz, deren Vertrauensstatus und Gültigkeitsbereich geändert, wird Laufzeitspezifische Zugriffsrichtlinie, siehe 92, anhand der Anwendungsspezifische Zugriffsrichtlinie siehe 91 geändert.

Wird eine bisher nicht im Vertrauensspeicher 36 enthaltene, für die Validierung von erlaubten Identitäten gültige weitere Validierungskennung in den Vertrauensspeicher 36 während der Laufzeit aufgenommen so wird dieser aktualisierte Vertrauensspeicher der Containerinstanz 31 bereitgestellt. Die weitere Validierungskennung ersetzt die Validierungskennung, falls die weiter Validierungskennung eine Änderung einer bestehenden Validierungskennung ist. Die weitere Validierungskennung wird zusätzlich zur ersten Validierungskennung in den Vertrauensspeicher 36 aufgenommen, wenn die weitere Validierungskennung eine Validierungskennung einer bisher nicht bekannten Zertifizierungsstelle ist.

Die Erstellung und Bereitstellung des Vertrauensspeichers 36 wird in einer orchestrierten Umgebung, beispielsweise mittels einer Orchestratorsoftware Kubernetes, durch eine eigenständige Orchestratorerweiterung implementiert. Die Orchestratorerweiterung stellt immer dann einen neuen Vertrauensspeicher 36 der Containerinstanz 31 zur Verfügung, wenn sich eine bestehende Validierungskennung der Zertifizierungsstelle 12, 15 im Cluster ändert oder eine neue Zertifizierungsstelle und damit eine weitere Validierungskennung angelegt wird. Mit Hilfe der Orchestratorerweiterung wird in beiden Fällen ein aktualisierter oder neuer Vertrauensspeicher erstellt. Der Vertrauensspeicher wird beispielsweise über einen definierten Speicherbereich, auch als Volume bezeichnet, welches der Containerinstanz 31 zugänglich ist, zur Verfügung gestellt. Der Speicherbereich kann hierbei persistenter oder auch flüchtiger Speicher sein. Der Speicherbereich wird bevorzugt dynamisch zur Laufzeit durch den die Verwaltungs- bzw. Orchestrierungsvorrichtung erzeugt werden. Sämtliche hier zu definierende Ressourcen können im Falle von Kubernetes z.B. mit Hilfe von Custom Ressource Definitions im Orchestrator hinterlegt werden.

Sofern nicht allen Containerinstanzen der gleiche Vertrauensspeicher zur Verfügung gestellt werden soll, ist es auch möglich, dass verschiedene Vertrauensspeicher durch die Verwaltungs- bzw. Orchestrierungsvorrichtung 50 vorkonfiguriert werden. Der Vertrauensspeicher für die Containerinstanz 31 wird durch Auswahl des entsprechend vorkonfigurierten Vertrauensspeichers aus der Mehrzahl von Vertrauensspeichern erstellt und der Containerinstanz 31 zugeordnet. Die Zuordnung kann beispielsweise durch Referenzieren auf Labels, die innerhalb der Bereitstellungsinformation 32 der Anwendung definiert sind, erfolgen.

Hierdurch ist es möglich der Containerinstanz 31 einen individuellen Vertrauensspeicher innerhalb einer orchestrierten Umgebung zuzuweisen. Die Zuweisung individualisierter Vertrauensspeicher 36 hat den Vorteil, dass eine Kommunikation zu Containerinstanzen, die keine "Block by default" Zugriffsrichtline enthalten, ebenfalls reguliert werden kann, da die Existenz eines Zertifikates im jeweiligen Vertrauensspeicher eine Mindestanforderung zum Aufbau einer mTLS-Kommunikation ist.

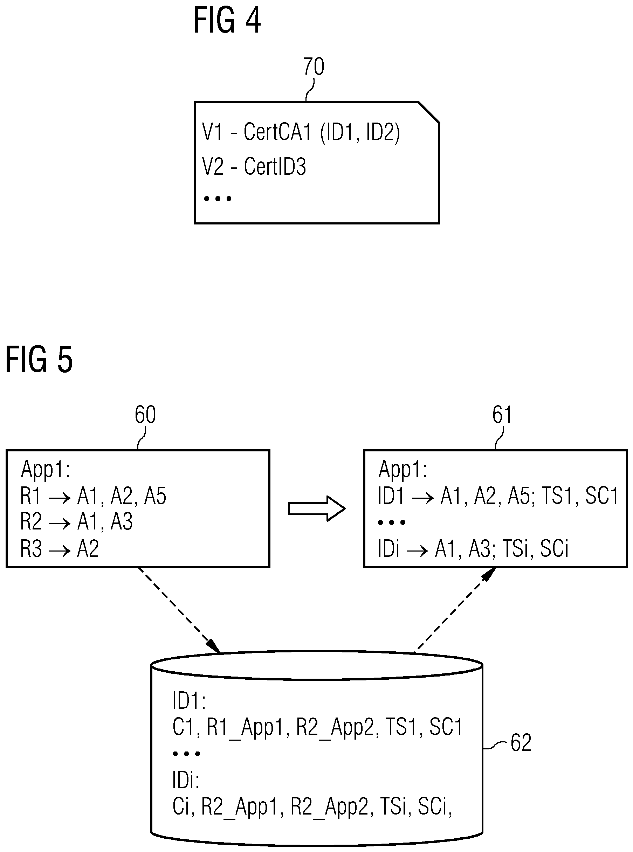

Fig.4 zeigt einen Vertrauensspeicher 70. Der Vertrauensspeicher umfasst für jede der für die Anwendung freigegebenen Identitäten eine Validierungskennung. Eine Validierungskennung V1 ist beispielsweise ein Stammzertifikat einer ersten Zertifizierungsstelle, die Zertifikate für die Identitäten ID1, ID2 ausgestellt hat. Eine Validierungskennung V2 ist beispielsweise ein Zertifikat der Identität ID3.

Nachdem durch den Administrator die Vertrauensspeicher umgebungsspezifisch definiert wurden, wird die Vertrauensdatenbank wie folgt konfiguriert. Jeder der für die Anwendung freigegebenen Identitäten bzw. jedem Zertifikat der freigegebenen Identitäten ein Vertrauensstatus zugeordnet. Zuordnung wird in der Vertrauensdatenbank Zugriffsrechte werden der Identität abhängig vom Vertrauensstatus der Identität zugewiesen. Der Vertrauensstatus der Identität wird beispielsweise abhängig von der ausstellenden Zertifizierungsstelle des Zertifikats der Identität oder einem im Zertifikat enthaltenen Parameter zugewiesen. Der Vertrauensstatus einer Identität wird hierzu durch den Administrator mit Hilfe der Verwaltungsvorrichtung in Vertrauensdatenbank 40 verwaltet. Einträge können beispielsweise im Falle der Orchestrierungslösung Kubernetes mit Hilfe entsprechender Custom Ressource Definitions verwaltet werden. Beispielsweise kann Identitäten bzw. Zertifikaten, die von einer ersten Zertifizierungsstelle ausgestellt wurden, ein höherer Vertrauensstatus zugewiesen werden als Identitäten/Zertifikaten, die von einer zweiten Zertifizierungsstelle ausgestellt wurden.

Sind Identitäten in Zertifikaten, die von unterschiedlichen Zertifizierungsstellen ausgestellt werden, nicht eindeutig, wird der Identität eine Kennung der ausstellenden Zertifizierungsstelle zugeordnet. Die Identität, das Zertifikat der Identität und die zugeordnete Kennung der ausstellenden Zertifizierungsstelle werden als Identitätsreferenz bezeichnet. Für eine Zertifizierungsstelle selbst wird angenommen, dass die gleiche Identität von der Zertifizierungsstelle nicht mehrfach ausgestellt wird. Wird eine Identität unterschiedlichen Containerinstanzen zugeordnet, wird bevorzugt angenommen, dass diese nicht unterschiedliche Vertrauensstatus annehmen können.

In einem Ausführungsbeispiel wird zusätzlich zu der Identitätsreferenz ein Gültigkeitsbereich des Vertrauensstatus definiert. Der Gültigkeitsbereich des Vertrauensstaus kann beispielsweise bezogen auf ein oder mehrere Cluster in orchestrierten Umgebungen und/oder bezogen auf einen oder mehrere Namespaces und/oder bezogen auf Gastrechner und/oder auch einzelnen Container-Instanzen bzw. Anwendungen festgelegt sein. Sind mehrere unterschiedlich gefasste Einträge mit sich überlappendem Gültigkeitsbereich definiert wird bevorzugt der am engsten gefasste Gültigkeitsbereich für die Anwendungsspezifische- bzw. Laufzeitspezifische Zugriffsrichtlinie verwendet. Umfasst beispielsweise ein Gültigkeitsbereich die Anwendung und umfasst ein Gültigkeitsbereich den gesamten Cluster, so wird die Gültigkeit auf den enger gefassten Bereich der Anwendung verwendet. Mit Cluster wird die Gesamtheit der Gastrechner bezeichnet, die von einer Orchestrierungsvorrichtung verwaltet werden.

Zusätzlich wird für jeden Eintrag definiert, welche bekannte Rolle der Anwendungsspezifischen Zugriffsrichtlinie auf die Identitäten angewandt werden soll. Die Identitäten in der Vertrauensdatenbank können auch über reguläre Ausdrücke definiert werden, sodass beispielsweise einer kompletten Zertifizierungsstelle, einzelnen Zertifikaten oder mehreren Zertifizierungsstellen gleiche Identitäten zugeordnet werden können.

Fig. 5 zeigt einen beispielhaften Aufbau bzw. Inhalt einer Anwendungsspezifischen Zugriffsrichtlinie 60, der Laufzeitspezifischen Richtlinie 61 sowie der Vertrauensdatenbank 62. In der Anwendungsspezifischen Zugriffsrichtlinie 60 sind für die betreffende Anwendung Appl Rollen von Zugreifenden definiert und jeder Rolle ein oder mehrere zum Zugriff erlaubte Anwendungskomponenten A1,..., A5 zugewiesen.

Die Vertrauensdatenbank 62 umfasst für jede für die Anwendung freigegebene Identität ID1,...,IDi deren Zertifikat C1,...Ci bevorzugt mit einer Kennung einer das Zertifikat ausstellenden Zertifizierungsstelle, und eine der Identität ID1 zugeordnete Rolle in der Anwendung R1_App1, und/oder einen Vertrauensstatus TS1, ..., TSi und/oder eine Gültigkeitsbereich SC1,..., SCi des Vertrauensstatus TS1,...,TSi in der Anwendung. Ist eine Identität auch für weitere Anwendungen, beispielsweise Anwendung App2, freigegeben, so ist optional die Rolle der Identität für die weitere Anwendung in dem Eintrag für diese Identitäten eingetragen, siehe die Rolle R2_App2 in den Einträgen für die Identitäten ID1 und IDi in der Vertrauensdatenbank 62 in Fig.5.

Die Laufzeitspezifischen Richtlinie 61 wird für die Anwendung Appl basierend auf der Anwendungsspezifischen Zugriffsrichtlinie 60 und der Vertrauensdatenbank 62 erstellt. Die Richtlinien 20, 61 umfassen mindestens eine meist jedoch mehrere Richtlinien für verschiedene Rollen bzw. Identitäten. Jede dieser Richtlinien kann einzeln in der Anwendungsspezifischen Zugriffsrichtlinie 60 und der Laufzeitspezifischen Richtlinie 61 aktualisiert werden. Im dargestellten Fall wird als Identität mit der Rolle R1 die Identität ID1 in der Vertrauensdatenbank 62 ermittelt. Diese Identität ID1 wird in die Anwendungsspezifischen Zugriffsrichtlinie 60 zusammen mit deren Vertrauensstatus TS1 und Gültigkeitsbereich SC1 eingetragen und erhält somit Zugriff auf die in der Anwendungsspezifischen Zugriffsrichtline 60 angegebenen Anwendungskomponenten A1, A2, A5. Für die Identität IDi ist in der Vertrauensdatenbank 62 die Rolle R2_App1 eingetragen. Entsprechend wird die Identität IDi, sowie deren Vertrauensstatus TSi und/oder Gültigkeitsbereich SCi für den Zugriff auf die Anwendungskomponenten A1, A3 der Anwendung Appl in die Laufzeitspezifischen Richtlinie 61 eingetragen.

Wird die Anwendung in einer orchestrierten Umgebung auf einem Gastrechner aus einem Cluster von Gastrechnern ausgeführt, sind die Funktionalitäten der Verwaltungsvorrichtung 50 in der eine Orchestrierungsvorrichtung angeordnet. Wird innerhalb eines Clusters ein Eintrag in die Vertrauensdatenbank 62 hinzugefügt, überprüft die Orchestrierungsvorrichtung, ob die Anwendungsspezifische Zugriffsrichtlinie 60 aufgrund der geänderten Einstellungen zu aktualisieren ist, siehe auch Fig. 2. Für die Anwendungsspezifische Zugriffsrichtlinie 60 wird hierbei angenommen, dass diese für die Orchestrierungsvorrichtung zugreifbar ist. Dies ist sichergestellt, indem Anwendungsspezifische Zugriffsrichtlinie 60 mit der Bereitstellungskonfiguration an den Gastrechner übergeben wird oder alternativ an einem sonstigen, der Orchestrierungsvorrichtung bekannten Ort hinterlegt ist. Die Überprüfung wird vorgenommen, indem Orchestrierungsvorrichtung die Anwendungsspezifische Zugriffsrichtline 60 mit Hilfe der oben beschriebenen Erweiterung in eine Laufzeitspezifische Zugriffsrichtlinie 61 übersetzt, indem die vorab bekannten Rollen, welche in der Anwendungsspezifischen Zugriffsrichtlinie 60 hinterlegt sind, durch die in der Vertrauensdatenbank hinterlegten Identitätsreferenzen der Zertifikate ersetzt.

Die Laufzeitspezifische Zugriffsrichtlinie wird aus der Anwendungsspezifische Zugriffsrichtlinie neu erstellt, wenn ein Eintrag in der Vertrauensdatenbank geändert, hinzugefügt oder gelöscht wird. Um zu verhindern, dass ständig neue Richtlinien definiert werden, kann die Verwaltungsvorrichtung 50 nach der Erstellung einer Laufzeitspezifischen Zugriffsrichtline 61 eine Prüfsumme bilden und diese in der Vertrauensdatenbank hinterlegen. Eine aktualisierte Laufzeitspezifische Zugriffsrichtline wird nur dann dem Gastrechner bereitgestellt, wenn sich die Prüfsumme der neu aktualisierten Laufzeitspezifische Zugriffsrichtline von der Prüfsumme in der Vertrauensdatenbank unterscheidet.

Werden Anwendungen aktualisiert oder gelöscht, wird bevorzugt nur die Prüfsumme für die Laufzeitspezifische Zugriffsrichtline innerhalb der Vertrauensdatenbank 62 gelöscht. Alle sonstigen Einträge bleiben erhalten. Hierdurch ist sichergestellt, dass aktualisierte Anwendungsspezifische Zugriffsrichtlinien bei der Aktualisierung einer kompletten containerisierten Anwendung ebenfalls aktualisiert wird.

Durch das beschriebene Verfahren und das beschriebene System können Zugriffsberechtigungen, beispielsweise von ein Anwendungsentwickler, für eine containerisierte Anwendung vorab definiert werden, die außerhalb der Anwendung durchgesetzt werden. Die finalen Identitäten auf der Laufzeitumgebung müssen zum Zeitpunkt der Erstellung nicht bekannt sind.

Der Zugriff auf die Anwendung kann abgestuft zertifikatsspezifisch, also für eine einzelne Identität bzw. deren Zertifikat und/oder abhängig von einzelnen Zertifizierungsstellen einzelner Zertifikate erlaubt werden.

Auch eine applikationsspezifische Zuweisung eines Vertrauensstatus auf einer orchestrierten Laufzeitumgebung ist möglich. Durch den zuvor genannten Punkt kann die gleiche Identität auf dem gleichen Cluster bzw. Gastrechner/Gerät für unterschiedliche Zielapplikationen unterschiedlich berechtigt werden.

Der Applikationsentwickler, welcher sich ebenfalls um die Definition der Zugriffsberechtigungen zu einer App kümmert, kann die komplexe Aufgabe der Regelwerksdefinition übernehmen. Der Betreiber weist lediglich den Vertrauensstatus einer Zertifizierungsstelle oder eines bekannten Zertifikates zu und mappt somit die anzuwendenden Regeln auf die innerhalb der Laufzeitumgebung bekannten Identität.

Gleichen Identitäten, die von unterschiedlichen Zertifizierungsstellen bestätigt werden, können unterschiedlichen Regeln zugeordnet werden.

Die Zugriffsrichtlinien können den Zugriff auf die Anwendung sowohl ein- als auch ausgehend beschränken.

Der Vertrauensspeicher an individuell einer Anwendung bzw. einer einzelnen Containerinstanz innerhalb der Anwendung zugeordnet werden.

Alle Verfahrensschritte können durch die entsprechenden Geräte implementiert werden, die zum Ausführen des jeweiligen Verfahrensschrittes geeignet sind. Alle Funktionen, die von gegenständlichen Merkmalen ausgeführt werden können, können ein Verfahrensschritt des Verfahrens sein. Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur dynamischen Anpassung einer Zugriffsrichtlinie für eine Container-implementierte Anwendung während der Laufzeit, umfassend die Schritte:
- Empfangen (S1) einer Anwendungsspezifischen Zugriffsrichtlinie (33) zusätzlich zu einer Bereitstellungskonfiguration (32) für die Container-implementierte Anwendung auf einer Container-Laufzeitumgebung eines Gastrechners (30) von einer Verwaltungsvorrichtung (50),
- Erstellen (S2) einer Containerinstanz (31) entsprechend der Bereitstellungskonfiguration (32) auf der Container-Laufzeitumgebung,
- Erstellen (S3) einer Laufzeitspezifischen Zugriffsrichtlinie (34) für die Containerinstanz (31), indem die Anwendungsspezifische Zugriffsrichtlinie (33) mit der mindestens einen für die Anwendung freigegebenen Identität aktualisiert wird,
- Erstellen (S4) eines Vertrauensspeichers (36) umfassend mindestens eine Validierungskennung zur Validierung der Gültigkeit der mindestens einen freigegebenen Identität und Zuordnen des Vertrauensspeichers (36) zur Containerinstanz (31) durch die Verwaltungsvorrichtung (50),
- Überprüfen (S5) einer Zugriffsanfrage auf die Containerinstanz (31) anhand der in der Zugriffsanfrage enthaltenen Identität eines Zugreifenden gegenüber der Laufzeitspezifischen Zugriffsrichtlinie (34) und des Vertrauensspeichers (36) durch eine Überprüfungseinheit (35), und
- Erlauben (S6) eines Zugriffs auf die Anwendung lediglich dann, wenn das Überprüfungsergebnis der Zugriffsanfrage positiv ist, ansonsten Ausführen (S7) einer Abweisungsfunktion.

2. Verfahren nach Anspruch 1, wobei die Anwendungsspezifische Zugriffsrichtlinie (33) mindestens eine Rollenspezifische Zugriffsrichtlinie umfasst und die für die Anwendung freigegebenen Identitäten entsprechend einer ihnen zugewiesenen Rolle von der Verwaltungsvorrichtung (50) den Rollenspezifischen Richtlinien zugeordnet werden.

3. Verfahren nach einem der vorangehenden Ansprüche, wobei von der Verwaltungsvorrichtung (50) eine bisher nicht im Vertrauensspeicher (36) enthaltene, für die Validierung von erlaubten Identitäten gültige weitere Validierungskennung in den Vertrauensspeicher (36) während der Laufzeit aufgenommen wird und dieser aktualisierte Vertrauensspeicher der Containerinstanz (31) bereitgestellt wird.

4. Verfahren nach Anspruch 3, wobei die weitere Validierungskennung die Validierungskennung ersetzt oder die weitere Validierungskennung zusätzlich zur ersten Validierungskennung in den Vertrauensspeicher (36) aufgenommen wird.

5. Verfahren nach einem der Ansprüche 3-4, wobei die Validierungskennung ein Zertifikat umfassend einen öffentlichen Schlüssel einer Zertifizierungsstelle (12, 15) und/oder ein Zertifikat (10, 13) umfassend den öffentlichen Schlüssel einer Teilmenge der freigegebenen Identitäten ist.

6. Verfahren nach einem der vorangehenden Ansprüche, wobei der Vertrauensspeicher (36) durch Zuweisen eines Speicherbereichs, auf dem der aktualisierte Vertrauensspeicher gespeichert ist, der Containerinstanz (31) bereitgestellt wird.

7. Verfahren nach Anspruch 6, wobei der zugewiesene Speicherbereich ein persistenter oder flüchtiger Speicher ist und/oder der zugewiesene Speicherbereich dynamisch während der Laufzeit durch die Verwaltungsvorrichtung erzeugt wird.

8. Verfahren nach einem der vorangehenden Ansprüche, wobei der Vertrauensspeicher (36) durch Auswahl eines entsprechend vorkonfigurierten Vertrauensspeichers aus der Mehrzahl von Vertrauensspeichern erstellt wird.

9. Verfahren nach einem der Ansprüche 2-8, wobei jeder der für die Anwendung freigegebenen Identitäten der freigegebenen Identität ein Vertrauensstatus (TS) zugeordnet wird.

10. Verfahren nach Anspruch 9, wobei jedem Vertrauensstatus (TS) ein Gültigkeitsbereich (SC) zugeordnet wird und der Vertrauensstatus (TS) lediglich in dem zugeordneten Gültigkeitsbereich (SC) gültig ist.

11. Verfahren nach einem der Ansprüche 8-9, wobei in einer Vertrauensdatenbank (40) jeder Identität ein für die Identität ausgestelltes Zertifikat (11, 14), bevorzugt mit einer Kennung einer Zertifizierungsstelle (12, 15) des Zertifikats (11, 14), und mindestens eine der folgenden Angaben zugeordnet ist:
- eine der Identität zugeordnete Rolle in der Anwendung,
- der Vertrauensstatus (TS) und/oder Gültigkeitsbereich (SC) des Vertrauensstatus in der Anwendung.

12. Verfahren nach einem der vorangehenden Ansprüche, wobei die für die Anwendung freigegebenen Identitäten von der Vertrauensdatenbank (40) bereitgestellt werden, und die Laufzeitspezifische Zugriffsrichtlinie (34) aus der Anwendungsspezifische Zugriffsrichtlinie (33) neu erstellt wird, wenn ein Eintrag in der Vertrauensdatenbank (40) geändert, hinzugefügt oder gelöscht wird.

13. Verfahren nach Anspruch 12, wobei eine Prüfsumme der Laufzeitspezifischen Zugriffsrichtlinie (34) erstellt und in der Vertrauensdatenbank gespeichert wird, und wobei die Laufzeitspezifische Zugriffsrichtlinie (34) nur dann aktualisiert wird, wenn sich die Prüfsumme der aktualisierten Laufzeitspezifische Zugriffsrichtlinie von der Prüfsumme der gespeicherten Laufzeitspezifische Zugriffsrichtlinie (34) unterscheidet.

14. System zur dynamischen Anpassung einer Zugriffsrichtlinie für eine Container-implementierte Anwendung während der Laufzeit, umfassend eine Verwaltungsvorrichtung (50), eine Container-Laufzeitumgebung und eine Überprüfungseinheit (35) auf einem Gastrechner (30), und eine Vertrauensdatenbank (40), die derart ausgebildet sind folgende Schritte auszuführen:
- Empfangen einer Anwendungsspezifischen Zugriffsrichtlinie (33) zusätzlich zu einer Bereitstellungskonfiguration (32) für die Container-implementierte Anwendung auf der Container-Laufzeitumgebung des Gastrechners (30) von der Verwaltungsvorrichtung (50),
- Erstellen einer Containerinstanz entsprechend der Bereitstellungskonfiguration (32) auf der Container-Laufzeitumgebung,
- Erstellen einer Laufzeitspezifischen Zugriffsrichtlinie (34) für die Containerinstanz (31), indem die Anwendungsspezifische Zugriffsrichtlinie (33) mit der mindestens einen für die Anwendung freigegebenen Identität aktualisiert wird, und
- Erstellen eines Vertrauensspeichers (36) umfassend mindestens eine Validierungskennung zur Validierung der Gültigkeit der mindestens einen freigegebenen Identität und Zuordnen des Vertraue (50),
- Überprüfen einer Zugriffsanfrage auf die Containerinstanz (31) anhand der in der Zugriffsanfrage enthaltenen Identität eines Zugreifenden gegenüber der Laufzeitspezifischen Zugriffsrichtlinie (34) und des Vertrauensspeichers (36) durch die Überprüfungseinheit (35), und
- Erlauben eines Zugriffs auf die Anwendung, lediglich dann, wenn das Überprüfungsergebnis der Zugriffsanfrage positiv ist, ansonsten Ausführen einer Abweisungsfunktion.

15. Computerprogrammprodukt, umfassend ein nicht flüchtiges computerlesbares Medium, das direkt in einen Speicher von mindestens einem digitalen Computer ladbar ist, umfassend Programmcodeteile, die bei Ausführung der Programmcodeteile durch den mindestens einen digitalen Computer diesen veranlassen, die Schritte des Verfahrens nach einem der Ansprüche 1-13 durchzuführen.
